# EUROPEAN PATENT SPECIFICATION

(11) **EP 3 639 038 B1**
(45) Date of publication and mention of the grant of the patent: **21.04.2021**
(21) Application number: 17737362.8
(22) Date of filing: 22.05.2017
(51) Int. Cl.: G01N 35/00, B01L 3/00

(54) **APPARATUS AND METHOD FOR IDENTIFYING A PLURALITY OF CASSETTES AND SLIDES FOR SPECIMENS OF BIOLOGICAL MATERIAL**
VORRICHTUNG UND VERFAHREN ZUR IDENTIFIZIERUNG EINER VIELZAHL VON KASSETTEN ODER OBJEKTTRÄGERN FÜR PROBEN VON BIOLOGISCHEM MATERIAL
APPAREIL ET PROCÉDÉ D'IDENTIFICATION D'UNE PLURALITÉ DE CASSETTES ET DE LAMES POUR SPÉCIMENS DE MATÉRIAU BIOLOGIQUE

(43) Date of publication of application: 22.04.2020
(73) Proprietor: Diapath S.p.A., 24057 Martinengo (BG) (IT)
(72) Inventor: LIMONTA, Enzo, 24057 Martinengo (BG) (IT); MANENTI, Giorgio, 24057 Martinengo (BG) (IT); RIZZATO, Fabio, 24057 Martinengo (BG) (IT); BERGAMINI, Vladimiro, 24057 Martinengo (BG) (IT)
(74) Representative: Trupiano, Federica
(86) International application number: PCT/IB2017/053005
(87) International publication number: WO 2018/215814

(56) References cited:
- WO-A1-97/24607
- WO-A1-2016/016814
- JP-A- 2008 058 135
- US-A- 5 265 170
- US-A1- 2011 121 001
- US-A1- 2015 276 566

## Description

### Field of the Invention

The present invention relates to an apparatus and method for identifying containers commonly used for the storage, transport and testing of tissue specimens and more generally of biological material, for example in cyto-histopathology laboratories, hospitals, etc.

### KNOWN PRIOR ART

As known, the biological material, such as for example the specimens of tissue coming for example from biopsies or surgeries, is conveniently treated and the corresponding histological sections are placed and preserved on slides, or cassettes.

The term slide identifies in this field a plate, generally made of glass, having standard size, on which the specimen of biological material is placed. Generally the specimen is fixed on the slide through a second plate (coverslip), having size and thickness smaller than the slide, adapted to cover the specimen of biological material placed on the slide. The term slide will be used below to denote the supporting plate of standard size, on which the specimen is fixed, for example by using the second coverslip plate.

The cassettes currently used are generally made of plastic material and have standard size and an inclined surface to allow their correct fixing to the devices used to obtain histological sections of specimens of tissues, called microtomes.

It is common practice marking the cassettes and the slides through identification elements or codes including, for example, data related to the specimen therein contained, data identifying the patient, information on the date and hour of the specimen, etc., and that are applied on a surface of the slide or cassette.

It should be noted that herein and below by the term "identification elements or codes" it is meant any means adapted to store information, preferably relating to the specimen contained in the cassette. Generally, cassettes and slides are manually marked by a numerical or alphanumerical code that is manually applied, printed on them or applied through labels, or similar means. Furthermore, other identification elements are currently used, such as for example bar codes (mono-dimensional, bi-dimensional or three-dimensional), or else magnetic tags, also of RFID type.

Since the specimen of biological material is attached on a cassette or slide, the operator will have to handle a high number of them, and a very sensitive issue is to detect rapidly and easily a defined slide, or a defined cassette, for example when new treatments, analyses, etc., must be carried out on the specimen of biological material of a defined slide, or cassette.

It follows that, in the laboratories, analysis centers, hospitals, etc., wherein a high number of cassettes and slides are worked on, there is the need for identifying the slides, or cassettes, in a rapid and simple way, primarily assuring high standards of safety to reduce to the minimum the identification errors.

In particular, it is necessary to handle, and in particular to identify, the cassettes and slides inside the archives, or storage unit, in which they are preserved, in case it is necessary to carry out new operations on a defined specimen of biological material.

In particular, there is the problem of being able to identify the cassettes and/or slides inside the containers in which a certain number of slides or cassettes are preserved.

Currently, a certain number of slides, or cassettes, are supported in containers in which they are overlapped on each other, i.e. so that the main surfaces of two slides, or two cassettes, are overlapped. In some cases, the employed containers allow housing a certain number of cassettes and slides by supporting them vertically, at a certain distance to each other, in a plurality of spaces, to allow the insertion/removal of slides in/from the container.

However, when the slides or cassettes are arranged inside the container, either when they are spaced from one another or else overlapped with the contacting surfaces, is difficult to carry out their identification, and in particular the reading/writing of the identification elements or codes that usually are arranged on a surface of the slide or cassette.

In these cases the operator must necessarily extract the slides and/or the cassettes from the supporting container, for example in order to identify them. This results in an increase in the time required, causing in addition the problem that once the slides have been extracted, they are not necessarily replaced in the same position inside the container, so that a possible following identification of a particular slide is made even more complicated.

The document WO2016/016814 discloses an apparatus for identifying slides and cassettes for specimens of biological material, the slides and cassettes being provided with at least one identification code and being inserted and supported in at least one supporting container, the apparatus comprising at least one reading device to read identification codes of the slides and cassettes, said reading device having an operational reading field, the apparatus further comprising at least one shifting device to shift at least one slide or cassette into the operational field of the reading device, the apparatus being configured to carry out the identification of both the slides and cassettes by performing a reading mode for said slides and cassettes through said shifting device to shift at least one slide or cassette, wherein in said reading mode, at least one slide or cassette is shifted from a rest position to an operating position into said operational reading field of said reading device through said shifting device to shift at least one slide or cassette.

The document US8722412 describes a device in which the slides arranged in a container are read after their uplift inside the container itself. However, in this device the slides are lifted contemporaneously and the movement of the lifter causes the fall by gravity of the slides and allows the reading thereof. The contemporaneous uplift of all the slides needs the lifter to have an extent at least equal to that of the container. Such a configuration causes excessive size and thus excessive bulk, further causing an undesirable increase of the size of the device. In particular, the subsequent movement of the lifter to cause the fall of the container thus entails a bulk equal to twice the length of the container when the lifter is displaced to cause the fall of all the slides.

It is therefore evident that the optimization of slide and cassette handling, in order to identify them especially when gathered together in a supporting container, represents a significant advantage as well as a goal to be achieved by the field experts.

An object of the present invention is to provide an apparatus, a method and a more functional and economical system for faster reading and handling the identification elements, by limiting the required movement of slides and cassettes.

Object of the present invention is to provide a reading apparatus to read the identification elements, which is able to selectively identify the slides or cassettes according to the user's needs, while remaining compact in size and easy to use.

Object of the present invention is also to provide a versatile and compact apparatus able to independently recognize and distinguish the slides from the cassettes and apply the appropriate reading and handling method.

### Summary of the invention

These and other objects are achieved by the apparatus and method according to the respective independent claims. Further characteristics/aspects of the invention are reported in the dependent claims.

The present invention relates to an apparatus for identifying slides and cassettes for specimens of biological material, the slides and the cassettes being inserted and supported in at least one supporting container, the apparatus comprising at least one reading device having an operational reading field, to read identification codes of the slides and cassettes.

The apparatus further comprises a shifting device to shift at least one slide into the operational reading field and at least one deflecting element to deflect the operational field of the reading device. The apparatus according to the invention is configured either to perform a first reading mode for said slides through the shifting device to shift at least one slide or to perform a second reading mode for the cassettes through the deflecting element to deflect the operational field of the reading device.

Advantageously, by providing both the shifting device to shift at least one slide and the deflecting element to deflect the reading field of the reading device, the selective identification of the cassettes and slides can be carried out by means of a single device. In other words, by means of the identifying apparatus according to the invention, the identification of both the cassettes and slides can be selectively carried out by performing either a first reading mode in which the shifting device to shift at least one slide allows the latter to be read, or a second reading mode in which the deflecting element allows at least one cassettes to be arranged in the reading field of the reading device.

In the first reading mode at least one slide is shifted into the operational reading field of the reading device by means of the shifting device. In the second reading mode, the at least one deflecting element to deflect the operational reading field is interposed between the reading device and at least one cassette. It should be noted that the term "interposed" is used herein to denote that in general the at least one deflecting element to deflect the operational reading field is arranged in the operational reading field, which is thus suitably deflected to be directed towards the cassette so as to allow the latter to be identified by the reading device.

In , the second reading mode, the at least one cassette to be identified is not moved inside the container in which it is housed.

According to an aspect of the present invention, the shifting device comprises at least one gripper configured so as to hold at least one slide and cause it to be temporarily shifted into the operational reading field of the reading device, preferably while keeping the slide inside the container. Advantageously, by using a gripper, at least one slide can be temporarily held and shifted into the reading field of the reading device so as to be identified.

From the outset, it should be noted that hereinafter the term "gripper" means an element for the grip by two movable parts intended to come into contact with the slide and hold it, or in which one part is fixed and the other one is movable with respect to the first one.

According to an aspect of the present invention, the deflecting element comprises at least one mirror preferably tilted to cause the operational reading field to be deflected towards at least one cassette.

According to an aspect of the present invention, the reading device is arranged on a movable support and the shifting device to shift at least one slide is movable with respect to the reading device, or vice versa. As a result, at least one slide, that is temporarily held by the shifting means, can be selectively placed at the operational reading field of the reading device or can be moved away from the operational reading field.

According to an aspect of the present invention, the deflecting element is movable with respect to the reading device. As a result, when it is not required to read the cassettes and thus to deflect towards them the reading field, in order to carry out the reading of at least one slide, also the deflecting element can be advantageously moved away from the operational reading field, thus not interfering therewith.

According to an aspect of the present invention, the shifting device to shift at least one slide, the reading device, and the at least one deflecting element are arranged so that by activating the shifting device, at least one slide is caused to move into the operational reading field of the reading device and, at the same time, the deflecting element is caused to move away from the operational reading field. Advantageously, by such a configuration and with only one operation, at least one slide can be brought in the operational reading field and the deflecting element can be simultaneously displaced so that the latter is not arranged in the operational reading field.

As regards the ways of identifying slides and cassettes, according to an aspect of the present invention, the device comprises a control unit configured either to receive a signal (S1) indicating the request to read at least one slide, or to receive a signal (S2) indicating the request to read at least one cassette. The control unit is also configured either to generate an execution signal (SE1) for performing a first reading mode for the slides, or an execution signal (SE2) for performing a second reading mode for the cassettes, depending on the received signal (S1, S2).

Advantageously, thanks to the control unit, the apparatus can be controlled so as to be able to selectively carry out the requested mode to identify slides and/or cassettes, depending on the input signal.

According to an aspect of the present invention, the input signal can be generated based on a sensor adapted to detect the presence of slides or cassettes inside the container that is inserted into the identifying apparatus according to the invention. As an alternative, there can be identification codes or physical recognition elements on the container so that the content thereof can be determined by an appropriate sensor by reading them. Otherwise, according to a further aspect, the request indicating signal (S1, S2) can be manually generated by an operator through a selector.

The present invention further relates to an identifying system to identify slides and cassettes comprising at least one identifying apparatus to identify slides and cassettes, according to aspects and characteristics herein described and/or claimed.

The system comprises a plurality of supporting containers for a plurality of slides or cassettes insertable in the identifying apparatus, preferably the system further comprises at least one storage unit for containers.

The present invention further relates to a method for identifying slides and/or cassettes for specimens of biological material by means of an identifying apparatus according to the invention herein described and/or claimed.

The method comprises the step of selectively performing either a first reading mode for said slides through a shifting device to shift at least one slide, or a second reading mode for the cassettes by means of a deflecting element to deflect the operational field of the reading device.

In said first reading mode, the method comprises the step of shifting the slide from a rest position to an operating position in which the reading takes place .

According to an aspect, in said first reading mode, the method comprises after the reading step, the step of shifting the slide from the operating position to the rest position.

As mentioned with reference to the device, the identifying method according to the invention allows the selective identification of cassettes and slides to be quickly and easily carried out by means of a single device and thus without the need to use separate devices.

The two reading modes are therefore performed very quickly, simply and economically as well as very reliably.

### Brief description of the drawings

These and other advantages of the present invention will be evident from the following description and the drawings attached for illustrative and non-limiting purposes, wherein:
- figures 1a and 1b are, respectively, a front and a rear perspective views of a possible embodiment of the apparatus according to the present invention, wherein there is a container used for collecting slides;
- figures 1c and 1d are two rearward perspective views of a possible embodiment of the apparatus according to the present invention, wherein there is a container used for collecting slides during the step of lifting (and reading) one of them;
- figures 2a and 2b are, respectively, a front and a rear perspective views of a possible embodiment of the apparatus according to the present invention, wherein there is a container used for collecting cassettes;
- figure 3 shows a perspective schematic view of a slide and a cassette, both known in the art, which can be used in the apparatus according to the present invention.

### Methods for implementing the invention

Referring to the accompanying figures, a possible embodiment of the identifying apparatus 1 to identify slides and cassettes 3 for specimens of biological material will be described. The apparatus 1 is configured to receive at least one supporting container 10 in which a plurality of slides 2 and/or cassettes 3 are inserted and preferably supported in succession in a plurality of spaces S.

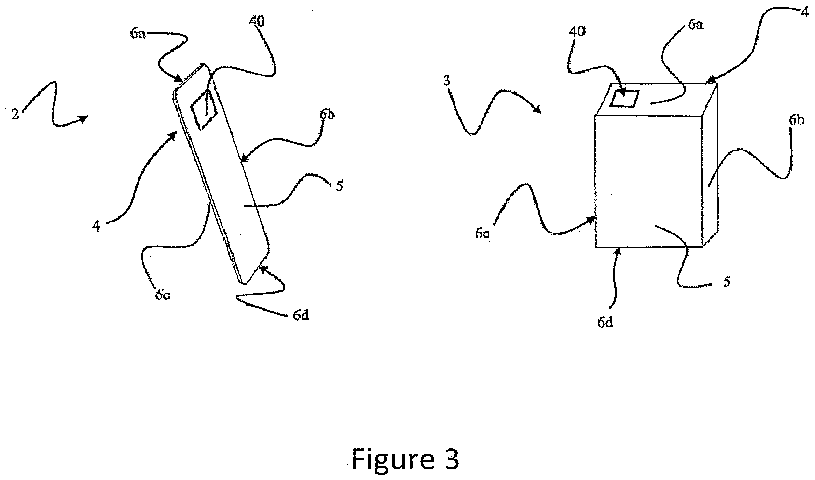

In general, as shown for example in Figure 3, the slide 2 and the cassette 3 comprise two predominant surfaces 4, 5 opposite to each other and one or more smaller side surfaces 6a, 6b, 6c, 6d, preferably four smaller side surfaces. In fact, both of these elements 2, 3 substantially have parallelepiped shape.

In particular, the slide 2 for biological material is substantially formed by a sheet having two predominant surfaces 4, 5 opposite to each other, i.e. the surfaces on which the sample of biological material is placed, and four smaller side surfaces 6a, 6b , 6c, 6d.

On the other hand, the cassette 3 has a substantially parallelepiped shape in which two predominant surfaces 4 and 5 opposite to each other, and four side surfaces 6a, 6b, 6c and 6d having smaller extent than the predominant ones 4, 5 can be seen. As known, one of the side surfaces 6a is tilted.

As mentioned, thanks to identification codes 40 placed on at least one surface of both slides 2 and cassettes 3, the invention allows them to be read and handled.

However, even other supporting elements having shape similar to that of the cassettes and slides, can still be used with the apparatus 1 according to the present invention.

It should also be noted that, although the attached figures show containers 10 in which there is a single row of slides arranged in succession, according to other possible embodiments the containers 10 may be modified in order to support multiple rows of slides or cassettes. Otherwise, two or more containers 10 may be housed in the apparatus 1.

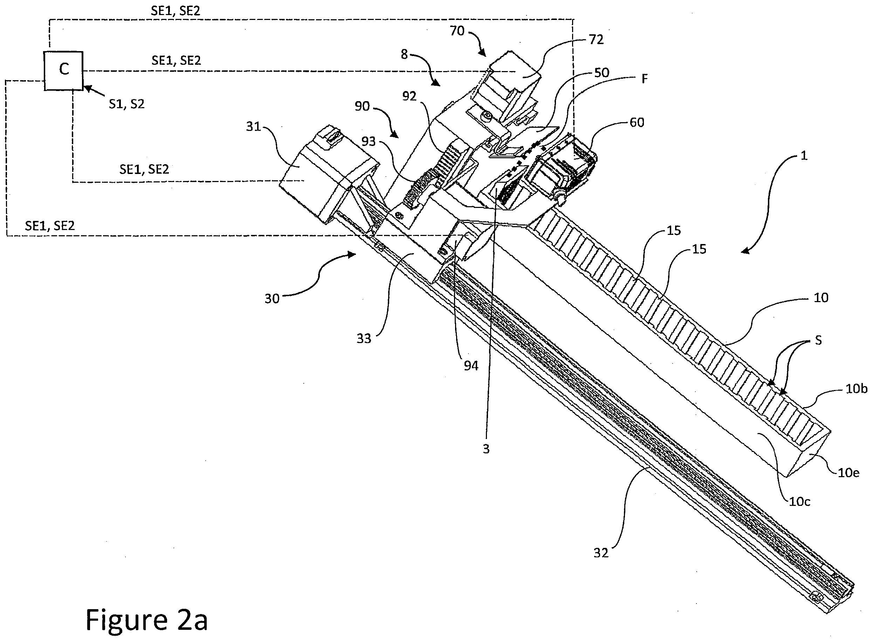

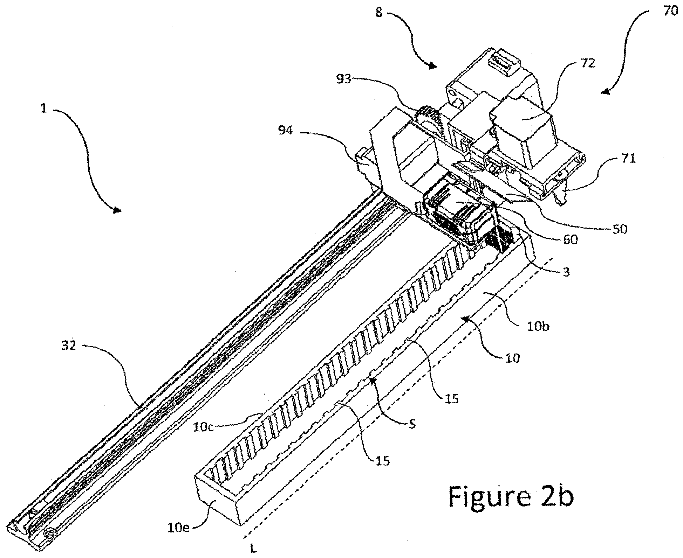

It should also be noted that for the sake of illustrative simplicity, Figures 2a, 2b show only one cassette 3 inside the container 10.

As can be seen for example in the figures, according to the present invention the apparatus 1 comprises at least one reading device 60 to read the identification codes 40 of the slides 2 or the cassettes 3. The reading device 60 is constrained to a movable support 8 which, through sliding means 30, allows the reading device 60 to be moved along (at) the container 10 adapted to house the slides 2 or the cassettes 3. The sliding means 30 and the device 60 are preferably controlled by a control unit C.

According to an embodiment, the apparatus 1 comprises a housing seat allowing one or more containers 10 to be housed.

According to an advantageous aspect of the present invention, the supporting container 10 of the slides 2 or cassettes 3 can be removed from the housing seat of the apparatus 1, in other words the container can be extracted from/inserted into the apparatus when one or more operations have to be carried out on the slides 2, or the cassettes 3, housed in the container 10.

Advantageously, a plurality of containers 10 containing several slides and used for example in a storage unit, or archive, for storing slides and/or cassettes can be used in the apparatus 1 according to the invention.

In particular, a system for handling slides and cassettes according to the invention comprises at least one apparatus 1, which will be described in more detail hereinafter, and a plurality of containers 10 each able to support a plurality of slides and/or cassettes. The system may also comprise other devices, such as a storage unit (not shown in the attached figures) for storing slides through the plurality of containers 10.

Turning back to the container 10 (insertable in the apparatus), according to a preferred embodiment, the slides 2, or the cassettes 3, are arranged face to face with respect to each other with at least one predominant surface 4, 5 of a slide facing at least one predominant surface 4, 5 of another slide.

However, other cassette or slide arrangements can still be used, for example they can be supported in succession, for example by putting the smaller side surfaces so as to face each other.

It should also be noted that the expression "arranged in succession" means that a plurality of slides 2 (or cassettes) are supported in the same container, thereby forming substantially one or more rows of slides.

Preferably, the slides are supported in the container so as to be spaced apart from one another in order to allow the insertion/extraction into/from the container 10, as well as the displacement caused, as will be seen, by convenient sliding means 30 the apparatus 1 is provided with.

The spaces S for receiving the slides 2 (or cassettes) are spaced apart so as to house the largest number of slides while keeping sufficient distance among them so as to allow the insertion/extraction of slides into/from the container 10.

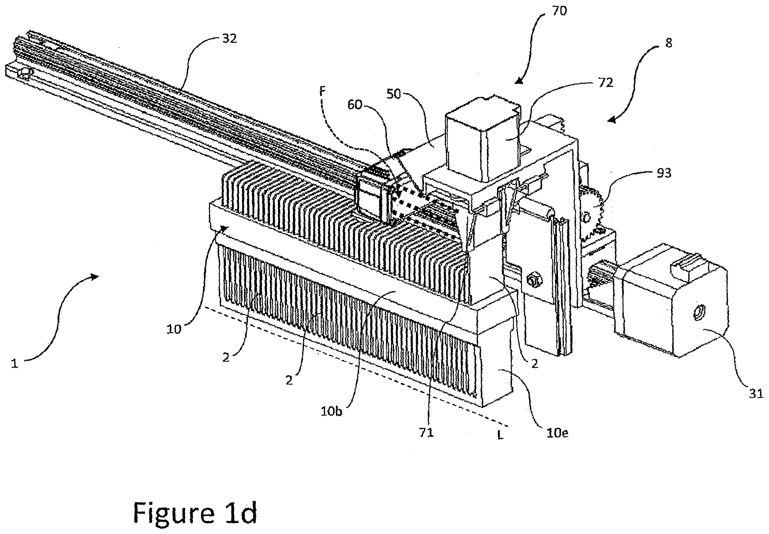

Preferably, the slides (or cassettes) are supported in succession along at least one line L, preferably a straight line (such as visible in Figures 1d and 2b).

According to an aspect of the invention, the predominant surfaces 4, 5 of the slide (or cassette) are substantially perpendicular to the line L along which the slides are arranged in succession.

According to some possible embodiments not shown in the accompanying figures, the slides may be arranged in succession, facing each other, and tilted with respect to the line L along which they are arranged in succession.

Furthermore, they can be also arranged in succession along a curved line, such as for example a circular line. In this case, each slide (or cassette) may be arranged such that the predominant surface 4, 5 either lie on or is parallel to a plane passing through the center of the circular line along which they are arranged in succession.

The container 10 has a substantially parallelepiped shape with an open top 10a for inserting the slides and two opposite side surfaces 10b, 10c on which guide means 15, such as projecting fins, are arranged to form a rack in which slides or cassettes can be inserted. The container further comprises two opposite side walls 10e.

As mentioned above, the identifying apparatus 1 according to the invention further comprises sliding means 30, i.e. means adapted to move, preferably temporarily, the movable support 8 and therefore the reading device 60, along at least one container 10, in particular parallel to the line L along which the slides 2 or the cassettes 3 are arranged.

According to an aspect of the present invention, the apparatus 1 is able to selectively read the slides 2 or the cassettes 3 by performing a respective reading mode depending on whether slides 2 or cassettes 3 are inserted in the container 10 housed within the apparatus 1. In this regard, according to a possible embodiment, the apparatus 1 comprises at least one sensor (not shown in the figures) placed for example on the movable support 8 and able to detect the presence of slides 2 or cassettes 3 in the container 10. Alternatively, each container 10 may be provided with identification codes or physical identification elements, which comprise information about its contents or indicating its content, and in particular about the presence of cassettes or slides inside it.

On the apparatus 1 (or in combination therewith or connected thereto) there can be a suitable reader, or sensor, of such identification codes of the container 10, so as to be able to read information about the contents of the container 10 and perform the first reading mode or the second reading mode, depending on whether slides 2 or cassettes 3 are in the container 10 housed in apparatus 1. As an alternative a reader, or sensor, may engage the at least one physical recognition element, then interact with such element in order to individuate the contents of the container and perform the appropriate reading mode.

The term "physical recognition element" means, for example, any element protruding from the container 10 and suitably individuated by a corresponding sensor, for example a seat of the apparatus 1 which is provided with an activation element such as a switch, is able to detect whether or not the container is present. For example, the protruding element can identify a container in which slides are inserted, while this protruding element can be absent in the cassette container (which can be therefore identified by non-activation of the sensor), which otherwise can have a different number of protruding elements or protruding elements having different shape with respect to those used for the slide containers.

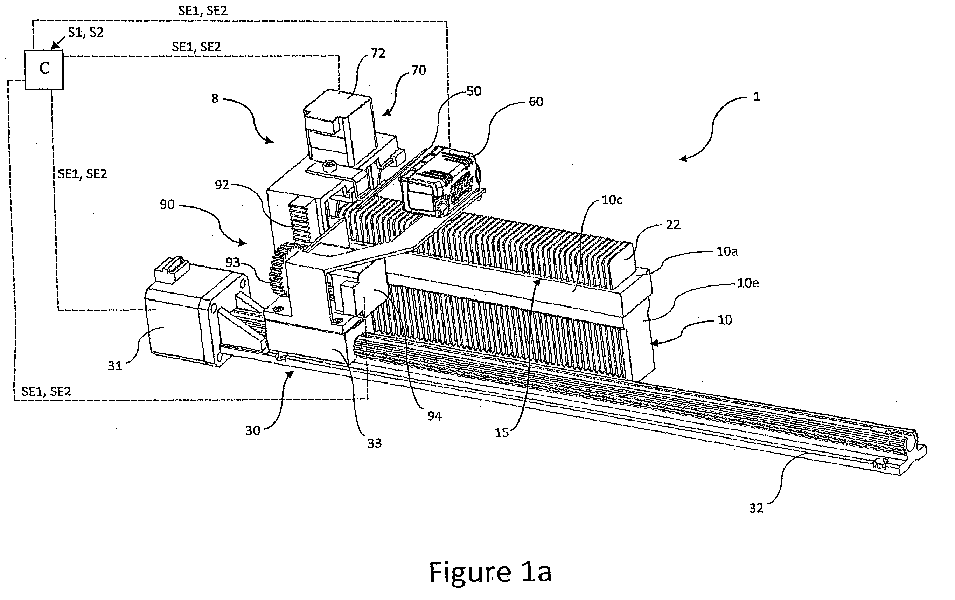

The sensor can communicate with the control unit C of the apparatus 1 which is able to activate one of the two reading modes suitable respectively for slides 2 or cassette 3, as will be discussed in detail below. The control unit C may be arranged outside the apparatus 1 and connected thereto or combined therewith via physical or wireless connections, such as schematically shown for example in figures 1A, 2A.

The control unit C is configured to receive, for example from the sensor adapted to read the information of contents of the container 10, a signal S1 indicating the request to read at least one slide 2, or to receive a signal S2 indicative of the request to read at least one cassette 3.

Once the signals are received by the control unit C, the latter generates an execution signal SE1 for performing a first reading mode for the slides 2, or an execution signal SE2 for performing a second reading mode for the cassettes 3.

In a possible alternative embodiment, the request indicating signal (S1, S2) is manually generated by an operator through a selector not shown in figures.

In other words, a selector, for example a switch or a manually operated button, is used by an operator of the apparatus 1 for manually selecting the identification mode to be performed by the apparatus 1, depending on whether there are slides 2 or cassettes 3 inside the container 10.

It should be noted that, according to an aspect of the invention, as will be better understood below, in the modes of reading and handling the cassettes 3, the latter remain in a rest position within the container 10 throughout the operation. On the contrary, in the reading and handling mode for the slides 2, the latter are shifted from a rest position to an operating position.

It should be noted that, in both modes, in the rest position the slides 2 and the cassettes 3 can be fully housed inside the container, i.e., placed completely below the opening 10a through which they are inserted into the container or, as is the case in the embodiment shown in the figures, they can protrude at least partially from the opening 10a, and with respect to the side walls 10b, 10c of the container 10.

It should be noted that, in the operating position, the slides are housed inside the container 10; in other words they are not completely extracted from it, but protrude from the opening 10a by a greater extent with respect to the rest position.

In a preferred embodiment, for both the identification modes, the movable support 8 with the reading device 60 travels along the container 10 and is stopped at a slide 2 or cassette 3 to be identified (that is, whose identification code 40 is to be read). Suitable sliding means 30, such as for example a motor 31 (for example of linear type), a guide 32 and a carriage 33 are suitably provided in order to allow them to move.

Preferably, the movable support 8 is mounted on the carriage 33 and able to travel along the guide 32 so as to be positioned at the slide 2 or cassette 3, so as to allow the reading of the identification codes 40.

According to a possible embodiment the motor 31, the guide 32 and the container 10 are fixed elements, whereas the carriage 33 on which the movable reading system 8 is mounted are movable elements.

However, possible embodiments in which the container 10 is movable with respect to the reading device 60 can not be excluded.

According to a possible embodiment, as can be seen for example in the figures, the carriage 30 and the movable support 8 constrained thereto are movable along a straight line L or in parallel with respect to it, along which the slides 2 or the cassettes 3 are arranged in succession.

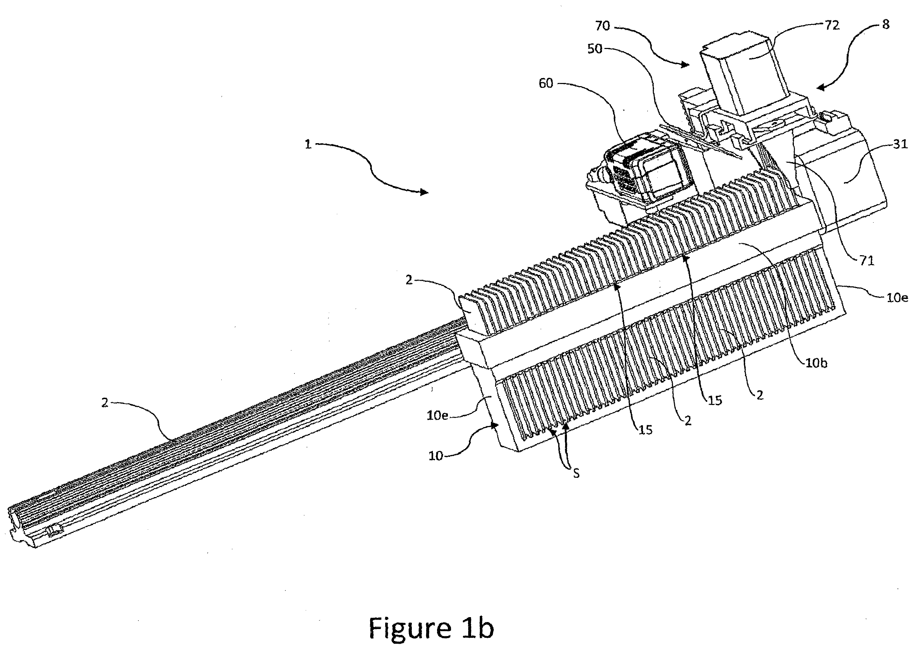

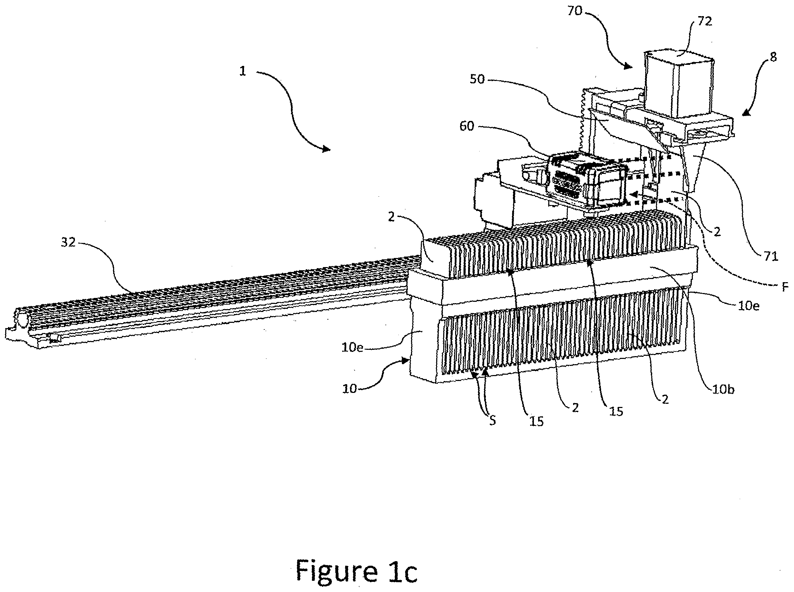

The reading device 60 to read slides 2 or cassettes 3 has an operational reading field F, i.e. an amount of space within which the identification codes 40 are detected and read. The reading field F is schematically depicted by some dashed lines, for example in figures 1c, 1d and 2a. According to a possible embodiment, the reading field is oriented so as to be substantially perpendicular to the predominant surfaces 4, 5 of the slide 2 and cassette 3 inserted in the container. According to a possible embodiment, the slides and the cassettes are vertically arranged in the container 10, whereas the reading field of the reading device 60 is substantially horizontally oriented, as can be seen for example in the figures 1, 2.

As can be seen, for example, in the figures, the apparatus 1 further comprises at least one shifting device 70 to shift at least one slide into the operational field of the reading device 60 in order to implement the reading mode for the slides 2, and comprises at least one deflecting element 50 to deflect the operational field of the reading device in order to implement the reading mode for the cassettes 3. According to a possible embodiment, both elements are arranged on the movable support 8, as can be seen for example in the attached Figures 1, 2.

The shifting device 70 to shift at least one slide 2 comprises at least one gripper 71 configured to temporarily hold at least one slide and to cause it to be temporarily shifted into the operational reading field F of the reading device 60. As mentioned, hereinafter, the term "gripper" refers to an element made up of two parts and able to grab a slide 2. Both parts can be movable, or one of them can be fixed and the other one movable.

The shifting device 70 further comprises an actuator 72 of the gripper 71 able to receive the signal from the control unit C and actuate the opening-closing of the gripper 71.

The deflecting element 50 to deflect the operational field comprises at least one preferably tilted mirror, to cause the operational field F to be deflected towards at least one cassette 3, and in particular towards the upper tilted surface 6a of the cassette 3, on which the identification code 40 is preferably arranged. For example, figure 2a schematically shows the operational field F substantially deflected by 90° by means of the deflecting element 50, see in particular the dashed line identified by reference F.

According to a possible embodiment, the shifting device 70 and the deflecting element 50 are movable with respect to the reading device 60. Lifting means 90 are further provided in the apparatus 1 according to the invention, in order to allow the shifting device 70 and/or the deflecting element 50 to be moved with respect to the reading device 60 and therefore to selectively move the slide into the operational reading field or vice versa.

According to a possible embodiment, the lifting means 90 comprise a rack 92, a respective pinion 93 and an actuator (or motor) 94, which allow the movable support 8, and therefore also both the shifting device 70 and the deflecting element 50 arranged on it, to be moved with respect to the reading device 60.

In general, the apparatus 1 according to the present invention therefore allows different operations to be carried out on the slides 2 or the cassettes 3 through two different identification modes. As a result, a single apparatus 1 can be advantageously used for reading both the slides 2 and the cassettes 3.

The two identification modes respectively for the slides 2 and the cassettes 3, which are selectively performed by the apparatus 1 according to the invention, will now be described.

During the mode used for identifying the slides 2, the control unit C sends an execution signal SE1 to the movable support 8 so as to cause the movement next to a slide 2 to be identified. More in detail the sliding means 30, and in particular the motor 31, is activated to move the carriage 33 and then the movable support 8, with the shifting device 70 constrained thereto, along the guide 32 until reaching the slide 2 to be identified.

Thus the shifting device 70, and in particular the gripper 71, is arranged at the slide 2 to be identified or is arranged in succession at the slides 2 arranged in the container 10 so as to subsequently identify them.

Later, the lifting means 90 are operated to allow the shifting device 70 and the deflecting element 50 to change their positions with respect to the reading device 60 after the device 70 has engaged at least one slide 2 (that is, when at least one slide is temporarily held).

The displacement (as shown in figures 1c and 1d) allows the slide 2 to be lifted (preferably vertically), preferably remaining at least partially housed inside the container, and to be moved into the operational reading field F of the device 60, so as to be exposed and thus "readable" by the reading device 60. Thus, the identification code 40, preferably placed on a predominant face 5 of the slide 2, is parallel to and in line with the reading device 60.

According to a possible embodiment, the slide 2 to be analyzed is at least partially lifted and therefore at least partially extracted from the container 10 by means of at least one gripper 71 which is operated to be opened and closed by means of an actuator 72 and lifting means 90 comprising, for example, a rack 92, a pinion 93, and their actuator 94.

According to a possible embodiment, the gripper 71 engages the surfaces 6b and 6c of the slide 2. Moving the slide 2 from its rest position to the operating one causes its lower side surface 6d to be separated from the contacting position with the bottom of the container 10 but, as mentioned, the slide 2 is preferably kept inside the container 10. Still when performing the reading mode for identifying the slides 2, the lifting means 90 further modify the position of the deflecting element 50 which, as mentioned, may comprise for example at least one mirror, causing it to be moved away and then removed from the operational reading field of the device 60.

Thus, the reading device 60 can read the identification code 40 placed on a face of the slide 2, which has been shifted to the operating position due to the vertical lifting movement caused by the gripper 71 holding it and by the lifting means 90.

In other words, in this way, the identification code 40 of the slide 2 enters the operational field F of the reading device 60.

Once the reading of the identification code 40 is completed, the slide 2 is returned to its rest position by being accompanied to the rest position (as a result of the downwards vertical movement of the lifting means 90) and subsequent opening of the gripper 71. However, it is not excluded that after completing the reading of the identification code 40, the slide 2 is returned to its rest position by opening the gripper 71 from the operating position, and therefore by gravity.

As regard the reading mode for identifying the cassettes 3, an execution signal SE2 is generated by the control unit C. The control unit C activates the reading device 60 which, by deflecting its own operational field F through the deflecting element 50, reads the identification code 40 of the cassette 3 which, as mentioned, preferably remains in its rest position in the container 10 and is generally not moved.

More in detail, according to a possible embodiment, the movable support 8 is moved by means of the sliding means 30 next to the cassette 3 to be identified. Thanks to the deflecting element 50, such as a tilted mirror 50, the reading device 60 reads the identification code 40 placed on the face 6a of the cassette 3. For example, the deflecting element 50 may comprise a mirror tilted preferably with respect to the horizontal line by an angle so as to be parallel to the face 6a of the cassette 3.

As already mentioned, during this operational mode, the cassettes 3 remain in their rest position throughout the operation time.

According to an aspect of the invention, the mirror 50 is conveniently spaced both from the reading device 60 and the face 6a of the cassette 3 in order to send readable and focused signals. The movable support 8 is suitably calibrated so as to be accurately positioned and to be aligned with the identification code 40 placed on the face 6a of the cassette 3.

Obviously, the reading device 60 the apparatus 1 is provided with, depending on the identification elements 40 the cassettes and slides are provided with, is compatible with the identification elements used and may include optical sensors for the recognition of tags having alphanumeric codes or bar codes, video cameras, cameras, which are possibly linked to OCR recognition software, CCD sensors, CMOS sensors.

Optical type reading devices 60, such as cameras or video cameras, or reading devices emitting a light scanning beam, such as laser readers, for example to read bar codes, and the like, may also be used. Obviously the operational reading field F, depending on possible embodiments, for example will correspond to the field of view of the camera or video camera, or to the space occupied by the scanning light beam of laser-type readers. The deflecting element is adapted, depending on the type of reading field, to cause a deviation thereof and, in general, to make possible to read a cassette placed outside the operational reading field through the deflecting element itself.

It should also be noted that, according to an aspect of the present invention, the reading device 60 may be provided with a focus adjustment system, so that the identification code can be automatically focused.

The reading of the identification code 40 of the slide, or cassette, is very advantageous even if the read code is associated with the slide (or cassette) position in the container 10, and preferably by storing such data.

In fact, by doing so, a desired slide in a given container 10 can be later recovered quickly and easily.

The apparatus 1 further allows the container 10, in which slides or cassettes are supported, to be identified so as to associate the slides with a given container. In this regard, also the container may be provided with similar codes or identification elements (not shown) that can be read by apparatus 1, for example by using the same reading device 60 used to read identification codes of slides (or cassettes).

Advantageously, the apparatus 1 further comprises at least one position sensor (not shown in the figures) to identify the position of slides 2, or cassettes, inside the container 10.

Preferably, at least one sensor identifies the position of the slide 2 or the cassette 3 within the spaces S where they are supported, in such a way as to allow the correct positioning of the movable support 8 along the container 10.

In a preferred embodiment, the position sensor is placed on the sliding means 30, for example on the guide 32.

Alternatively, by analyzing an operating parameter of the motor 31, the position of the slide 2 or cassette 3 can be determined. For example, in the case of the stepper motor, the position can be found by analyzing the value of steps done.

According to a further possible embodiment, the movable support 8 is sequentially advanced along the guide 32, and the positions reached are successively counted.

Identifying the slide position inside the container is advantageous because in this way the desired slide or cassette can be identified.

In particular, when reading the slide 2 (or cassette 3), a slide 2 (or cassette 3) in a given position inside the container 10 can be associated with the read information.

As mentioned above, the possibility of storing such information will allow the slide 2 or cassette 3 to be quickly and easily recovered at a later step, for example after the container containing the slides has been stored in a storage unit.

The device may also comprise a memory unit for storing data, for example concerning the positions of a given slide inside the container.

The control unit C of the apparatus 1 can be connected to an external device, such as for example a personal computer, or other device of a handling system to handle cassettes and slides. Also the memory unit may be arranged in another device to which the apparatus 1 according to the invention is connected.

The present invention also relates to a method for handling slides 2 and/or cassettes 3, for specimens of biological material. The method is preferably carried out by means of at least the apparatus 1 described and/or claimed herein.

The method allows the identification of a plurality of slides 2 (or cassettes 3) inserted and supported in at least one container 10.

According to an aspect of the invention, the method comprises the step of selectively performing either a first reading mode for the slides 2 by means of the shifting device 70 to shift at least one slide, or a second reading mode for the cassettes 3 by means of a deflecting element 50 to deflect the operational field of the reading device 60.

The method comprises the step of preferably temporarily moving the reading device 60 next to a slide 2 or cassette 3. As discussed above referring to the apparatus 1, in the case of slides, furthermore the method involves shifting the slide 2 from the rest position to an operating position, while keeping the slide 2 inside the container 10. As already mentioned, in case of cassettes 3, this operation is not necessary.

According to a possible embodiment, the method comprises the step of moving, preferably along the guide 32, the movable support 8 so that it can be moved in correspondence of the slide 2 or the cassette 3 to be identified.

According to an aspect of the present invention, the reading of the cassettes 3 takes place directly by means of the deflecting element 50, without moving the cassette, whereas the reading of the slides 2 takes place after the activation of the lifting means 90 which move the slide 2, for example by means of a gripper 71, and removes the deflecting element 50 from the operational field of the reading device 60. Once the slide is read in the operative position, it returns to the rest position due to the lifting means 90 returning to the lowered vertical position or due to the shifting means 70, and in particular the gripper 71, releasing the slide.

According to a possible embodiment, the method may comprise the steps of either receiving a signal S1 indicating the request to read at least one slide or receiving a signal S2 indicating the request to read at least one cassette, through a control unit C of the device.

Furthermore, the method comprises the steps of generating an execution signal SE1 for performing a first reading mode for said slides, or an execution signal SE2 for performing a second reading mode for said cassettes depending on the signal S1, S2 received by the control unit C.

Furthermore, the method may comprise the step of detecting whether the container 10 is intended to accommodate slides 2 or cassettes 3, for example by means of a sensor or a selector manually operated by the user, and carrying out the proper identification mode thanks to a control unit C which receives a signal from the sensor or selector and selects the appropriate reading mode. However, further identification modes to identify the contents of the container housed in the apparatus 1 are possible, as described for example above.

Furthermore, according to an aspect of the invention, the method comprises the step of detecting the position of slides or cassettes within the container 10 by means of a position sensor.

Advantageously, by identifying the position, one or more reading operations can be performed on the desired slide, or the information read on the identification codes 40 can be associated with the position of the corresponding slide inside the container.

The method may also comprise the step of identifying the container 10 in which the slides 2 and/or the cassettes 3 are supported.

More information about the arrangement of slides or cassettes has been previously given with reference to the apparatus 1 and may also be applied to the method according to the invention.

Obviously, modifications or improvements suggested by incidental or particular reasons can be made to the previously described invention without thereby departing from the scope of the appended claims.

## Claims

1. Apparatus (1) for identifying slides (2) and cassettes (3) for specimens of biological material, the slides and cassettes being provided with at least one identification code (40) and being inserted and supported in at least one supporting container (10), the apparatus comprising at least one reading device (60) to read identification codes (40) of the slides (2) and cassettes (3), said reading device having an operational reading field (F), the apparatus further comprising at least one shifting device (70) to shift at least one slide into the operational field of the reading device (60) and at least one deflecting element (50) to deflect the operational field of the reading device, apparatus (1) being configured tc carry out the identification of both the slides and cassettes selectively by performing either a first reading mode for said slides through said shifting device (70) to shift at least one slide or a second reading mode for said cassettes through said deflecting element (50) to deflect the operational field (F) of said reading device (60), wherein in said second reading mode for the cassettes (3), the cassettes (3) remain in a rest position within the supporting container (10) throughout the operation and at least one deflecting element (50) to deflect the operational reading field is arranged in said operative reading field (F), wherein in said first reading mode for the slides (2), at least one slide (2) is shifted from a rest position to an operating position into said operational reading field (F) of said reading device (60) through said shifting device (70) to shift at least one slide.

2. Apparatus according to claim 1, **characterized by** comprising a control unit (C) configured to receive a request indicating signal (S1) indicating the request to read at least one slide or to receive a request indicating signal (S2) indicating the request to read at least one cassette, said control unit being further configured to generate an execution signal (SE1) for performing a first reading mode for said slides or an execution signal (SE2) for performing a second reading mode for said cassettes depending on the received signal (S1, S2).

3. Apparatus according to claim 2, wherein said execution signal (SE1) for performing said first reading mode is transmitted to said shifting device (70) to shift at least one slide into the operational reading field (F).

4. Apparatus according to any one of claims 2 or 3, wherein said request indicating signal (S1, S2) is manually generated by an operator through a selector (80).

5. Apparatus according to any one of claims 2-4, wherein said request indicating signal (S1, S2) is generated by a sensor configured to determine whether in the container (10) inserted in the device there are cassettes or slides, or a combination thereof.

6. Apparatus according to any one of the preceding claims, wherein said shifting device (70) comprises at least one gripper (71) configured so as to hold at least one slide (2) and cause it to be temporarily shifted into the operational reading field (F), preferably while keeping the slide inside the container (10).

7. Apparatus according to any one of the preceding claims, wherein said deflecting element (50) comprises at least one mirror, preferably tilted, to cause the operational reading field (F) to be deflected towards at least one cassette.

8. Apparatus according to any one of the preceding claims, comprising at least one movable support (8), said shifting device (70) to shift at least one slide and said at least one deflecting element (50) to deflect the operational reading field (F) being both arranged on said movable support (8), preferably said movable support (8) and/or said at least one container (10) can move along a line (L), or parallel to said line (L), along which the slides (2) or the cassettes (3) are arranged in succession.

9. Apparatus according to claim 8, wherein said reading device (60) is arranged on said movable support (8), said shifting device (70) to shift at least one slide being movable with respect to said reading device (60), or said reading device (60) being movable with respect to said shifting device (70).

10. Apparatus according to any one of claims 8-9, wherein said shifting device (70), said reading device (60) and said at least one deflecting element (50) are arranged so that the activation of said shifting device causes at least one slide to be moved into the operational reading field (F) of said reading device (60) and, at the same time, causes the deflecting element (50) to be moved away from the operational reading field.

11. System for identifying slides (2) and cassettes (3) for specimens of biological material, comprising at least one apparatus (1) according to any one of the preceding claims, a plurality of supporting containers (10) for a plurality of slides or cassettes insertable in said at least one apparatus (1), preferably said system further comprising at least one storage unit for storing said containers (10).

12. Method for identifying slides (2) and/or cassettes (3) for specimens of biological material by means of an apparatus according to any one of claims 1 to 10, the method comprising the step of selectively performing either a first reading mode for said slides through said shifting device (70) to shift at least one slide, or a second reading mode for said cassettes through said deflecting element (50) to deflect the operational field of said reading device (60), comprising in said first reading mode the step of shifting the slide (2) from a rest position to an operating position in which the reading takes place, further comprising in said second reading mode the step of arranging said deflecting element (50) to deflect the operational reading field (F) between said reading device (60) and at least one cassette (3).

13. Method according to claim 12, **characterized by** comprising the step of either receiving a signal (S1) indicating the request to read at least one slide (2) or receiving a signal (S2) indicating the request to read at least one cassette (3), preferably ,when using an apparatus according to any one of claims 2-5 or 6-10 when dependent on claims 2-5, through said control unit (C) of the apparatus (1).

14. Method according to claim 12 or 13, **characterized by** comprising the step of detecting whether said container (10) accommodates slides (2) or cassettes (3) and, based on said detection, selectively performing either a first reading mode for said slides through said shifting device (70) to shift at least one slide, or a second reading mode for said cassettes through said deflecting element (50) to deflect the operational reading field (F).

15. Method according to any one of claims 12 to 14, **characterized by** comprising the step of preferably temporarily shifting said reading device (60) in correspondence of a slide (2), or a cassette (3).

## Patentansprüche

1. Vorrichtung (1) zum Identifizieren von Objektträgern (2) und Kassetten (3) für Proben aus biologischem Material, wobei die Objektträger und Kassetten mit mindestens einem Identifikationscode (40) versehen sind und in mindestens einen Tragebehälter (10) eingesetzt sind und von diesem gestützt werden, wobei die Vorrichtung mindestens eine Lesevorrichtung (60) zum Lesen von Identifikationscodes (40) der Objektträger (2) und Kassetten (3) umfasst, wobei die Lesevorrichtung ein operatives Lesefeld (F) aufweist, wobei die Vorrichtung weiterhin mindestens eine Verschiebevorrichtung (70) zum Verschieben mindestens eines Objektträgers in das operative Feld der Lesevorrichtung (60) umfasst und mindestens ein Ablenkelement (50) zum Ablenken des operativen Feldes der Lesevorrichtung, wobei die Vorrichtung (1) konfiguriert ist, um die Identifizierung von beiden den Objektträgern und Kassetten selektiv durchzuführen, indem entweder ein erster Lesemodus für die Objektträger durch die Verschiebevorrichtung (70) zum Verschieben mindestens eines Objektträgers durchgeführt wird, oder ein zweiter Lesemodus für die Kassetten durch das Ablenkelement (50) zum Ablenken des operativen Feldes (F) der Lesevorrichtung (60) durchgeführt wird, wobei in dem zweiten Lesemodus für die Kassetten (3) die Kassetten (3) während des ganzen Vorgangs in einer Ruheposition innerhalb des Tragebehälters (10) verbleiben, und wobei mindestens ein Ablenkelement (50) zum Ablenken des operativen Lesefeldes in dem operativen Lesefeld (F) angeordnet ist, wobei in dem ersten Lesemodus für die Objektträger (2) mindestens ein Objektträger (2) durch die Verschiebevorrichtung (70) zum Verschieben mindestens eines Objektträgers von einer Ruheposition in eine Betriebsposition in das operative Lesefeld (F) der Lesevorrichtung (60) verschoben wird.

2. Vorrichtung gemäß Anspruch 1, **gekennzeichnet durch** eine Steuereinheit (C), die konfiguriert ist, um ein Anforderungsanzeigesignal (S1) zu empfangen, das die Anforderung zum Lesen mindestens eines Objektträgers anzeigt, oder um ein Anforderungsanzeigesignal (S2) zu empfangen, das die Anforderung zum Lesen mindestens einer Kassette anzeigt, wobei die Steuereinheit ferner konfiguriert ist, um ein Ausführungssignal (SE1) zum Durchführen eines ersten Lesemodus für die Objektträger oder ein Ausführungssignal (SE2) zum Durchführen eines zweiten Lesemodus für die Kassetten in Abhängigkeit von dem empfangenen Signal (S1, S2) zu erzeugen.

3. Vorrichtung gemäß Anspruch 2, wobei das Ausführungssignal (SE1) zum Durchführen des ersten Lesemodus an die Verschiebevorrichtung (70) übertragen wird, um mindestens einen Objektträger in das operative Lesefeld (F) zu verschieben.

4. Vorrichtung gemäß einem der Ansprüche 2 oder 3, wobei das Anforderungsanzeigesignal (S1, S2) von einem Bediener manuell über einen Selektor (80) erzeugt wird.

5. Vorrichtung gemäß einem der Ansprüche 2 bis 4, wobei das Anforderungsanzeigesignal (S1, S2) von einem Sensor erzeugt wird, der konfiguriert ist, um zu bestimmen, ob in dem in die Vorrichtung eingesetzten Behälter (10) Kassetten oder Objektträger oder eine Kombination davon vorhanden sind.

6. Vorrichtung gemäß einem der vorhergehenden Ansprüche, wobei die Verschiebevorrichtung (70) mindestens einen Greifer (71) umfasst, der so konfiguriert ist, dass er mindestens einen Objektträger (2) hält und bewirkt, dass er vorübergehend in das operative Lesefeld (F) verschoben wird, vorzugsweise während der Objektträger im Behälter (10) gehalten wird.

7. Vorrichtung gemäß einem der vorhergehenden Ansprüche, wobei das Ablenkelement (50) mindestens einen Spiegel umfasst, der vorzugsweise gekippt ist, um zu bewirken, dass das operative Lesefeld (F) in Richtung mindestens einer Kassette abgelenkt wird.

8. Vorrichtung gemäß einem der vorhergehenden Ansprüche, umfassend mindestens einen beweglichen Träger (8), die Verschiebevorrichtung (70) zum Verschieben mindestens eines Objektträgers und das mindestens eine Ablenkelement (50) zum Ablenken des operativen Lesefeldes (F) wobei beide auf dem beweglichen Träger (8) angeordnet sind, wobei vorzugsweise sich der bewegliche Träger (8) und/oder der mindestens eine Behälter (10) entlang einer Linie (L) oder parallel zu der Linie (L) bewegen können, entlang der die Objektträger (2) oder die Kassetten (3) nacheinander angeordnet sind.

9. Vorrichtung gemäß Anspruch 8, wobei die Lesevorrichtung (60) auf dem beweglichen Träger (8) angeordnet ist, wobei die Verschiebevorrichtung (70) zum Verschieben mindestens eines Objektträgers in Bezug auf die Lesevorrichtung (60) beweglich ist, oder die Lesevorrichtung (60) in Bezug auf die Verschiebevorrichtung (70) beweglich ist.

10. Vorrichtung gemäß einem der Ansprüche 8 bis 9, wobei die Verschiebevorrichtung (70), die Lesevorrichtung (60) und das mindestens eine Ablenkelement (50) so angeordnet sind, dass die Aktivierung der Verschiebevorrichtung bewirkt, dass mindestens ein Objektträger in das operative Lesefeld (F) der Lesevorrichtung (60) bewegt wird und gleichzeitig bewirkt, dass das Ablenkelement (50) vom operativen Lesefeld wegbewegt wird.

11. System zum Identifizieren von Objektträgern (2) und Kassetten (3) für Proben aus biologischem Material umfassend mindestens eine Vorrichtung (1) gemäß einem der vorhergehenden Ansprüche, eine Vielzahl von Tragebehältern (10) für eine Vielzahl von Objektträgern oder Kassetten, die in die mindestens eine Vorrichtung (1) einführbar sind, wobei das System vorzugsweise weiterhin mindestens eine Lagereinheit zum Aufbewahren der Behälter (10) umfasst.

12. Verfahren zum Identifizieren von Objektträgern (2) und/oder Kassetten (3) für Proben von biologischem Material mittels einer Vorrichtung gemäß einem der Ansprüche 1 bis 10, wobei das Verfahren den Schritt umfasst, selektiv entweder einen ersten Lesemodus für die Objektträger durch eine Verschiebevorrichtung (70) zum Verschieben mindestens eines Objektträgers durchzuführen, oder einen zweiten Lesemodus für die Kassetten durch das Ablenkelement (50) zum Ablenken des operativen Feldes der Lesevorrichtung (60) durchzuführen, umfassend in dem ersten Lesemodus den Schritt des Verschiebens des Objektträgers (2) von einer Ruheposition in eine Betriebsposition, in der das Lesen stattfindet, weiterhin enthaltend in dem zweiten Lesemodus den Schritt des Anordnens des Ablenkelementes (50) zum Ablenken des operativen Lesefeldes (F) zwischen der Lesevorrichtung (60) und mindestens einer Kassette (3).

13. Verfahren gemäß Anspruch 12, **gekennzeichnet durch** den Schritt entweder ein Signal (S1) zu empfangen, das die Anforderung zum Lesen mindestens eines Objektträgers (2) anzeigt, oder ein Signal (S2) zu empfangen, das die Anforderung zum Lesen mindestens einer Kassette (3) anzeigt, vorzugsweise, wenn die Vorrichtung gemäß irgendeinem der Ansprüche 2 bis 5 oder 6 bis 10, wenn abhängig von den Ansprüchen 2 bis 5, verwendet wird, mittels der Steuereinheit (C) der Vorrichtung (1).

14. Verfahren gemäß Anspruch 12 oder 13, **gekennzeichnet durch** den Schritt des Erfassens, ob der Behälter (10) Objektträger (2) oder Kassetten (3) enthält, und basierend auf dieser Erfassung durch den Schritt der selektiven Durchführung entweder eines ersten Lesemodus für die Objektträger durch die Verschiebevorrichtung (70) zum Verschieben mindestens eines Objektträgers, oder eines zweiten Lesemodus für die Kassetten durch das Ablenkelement (50) zum Ablenken des operativen Lesefeldes (F).

15. Verfahren gemäß einem der Ansprüche 12 bis 14, **gekennzeichnet durch** den Schritt des vorzugsweise vorübergehenden Verschiebens der Lesevorrichtung (60) in Übereinstimmung mit einem Objektträger (2) oder einer Kassette (3).

## Revendications

1. Appareil (1) d'identification de lames (2) et de cassettes (3) pour des échantillons de matériel biologique, les lames et les cassettes étant pourvues d'au moins un code d'identification (40) et étant insérées et supportées dans au moins un récipient de soutien (10), l'appareil comprenant au moins un dispositif de lecture (60) pour lire des codes d'identification (40) des lames (2) et des cassettes (3), ledit dispositif de lecture présentant un champ de lecture opérationnel (F), l'appareil comprenant en outre au moins un dispositif de décalage (70) pour déplacer au moins une lame dans le champ opérationnel du dispositif de lecture (60) et au moins un élément de déviation (50) pour dévier le champ opérationnel du dispositif de lecture, l'appareil (1) étant configuré pour effectuer l'identification à la fois des lames et des cassettes de manière sélective en exécutant soit un premier mode de lecture pour lesdites lames par l'intermédiaire dudit dispositif de décalage (70) pour déplacer au moins une lame, soit un second mode de lecture pour lesdites cassettes par l'intermédiaire dudit élément de déviation (50) pour dévier le champ opérationnel (F) dudit dispositif de lecture (60), dans lequel dans ledit second mode de lecture pour les casettes (3), les cassettes (3) restent dans une position de repos à l'intérieur du récipient de soutien (10) tout au long de l'opération et au moins un élément de déviation (50) pour dévier le champ de lecture opérationnel est agencé dans ledit champ de lecture opérationnel (F), dans lequel dans ledit premier mode de lecture pour les lames (2), au moins une lame (2) est déplacée par rapport à une position de repos vers une position de fonctionnement dans ledit champ opérationnel (F) de lecture dudit dispositif de lecture (60) par l'intermédiaire dudit dispositif de décalage (70) pour déplacer au moins une lame.

2. Appareil selon la revendication 1, **caractérisé en ce qu'**il comprend une unité de commande (C) configurée pour recevoir un signal d'indication de requête (S1) indiquant la requête de lecture d'au moins une lame ou pour recevoir un signal d'indication de recette (S2) indiquant la requête de lecture d'au moins une cassette, ladite unité de commande étant en outre configurée pour générer un signal d'exécution (SE1) pour exécuter un premier mode de lecture pour lesdites lames ou un signal d'exécution (SE2) pour exécuter un second mode de lecture pour lesdites cassettes en fonction du signal (S1, S2) reçu.

3. Appareil selon la revendication 2, dans lequel ledit signal d'exécution (SE1) pour exécuter ledit premier mode de lecture est transmis audit dispositif de décalage (70) pour déplacer au moins une lame dans le champ de lecture opérationnel (F).

4. Appareil selon l'une quelconque des revendications 2 ou 3, dans lequel ledit signal d'indication de requête (S1, S2) est généré manuellement par un opérateur par l'intermédiaire d'un sélecteur (80).

5. Appareil selon l'une quelconque des revendications 2-4, dans lequel ledit signal d'indication de requête (S1, S2) est généré par un capteur configuré pour déterminer si dans le récipient (10) inséré dans le dispositif se trouvent des cassettes ou des lames, ou une combinaison de celles-ci.

6. Appareil selon l'une quelconque des revendications précédentes, dans lequel ledit dispositif de décalage (70) comprend au moins un dispositif de préhension (71) configuré de manière à maintenir au moins une lame (2) et à la déplacer temporairement dans le champ de lecture opérationnel (F), de préférence tout en maintenant la lame à l'intérieur du récipient (10).

7. Appareil selon l'une quelconque des revendications précédentes, dans lequel ledit élément de déviation (50) comprend au moins un miroir, de préférence incliné, pour amener le champ de lecture opérationnel (F) à être dévié vers au moins une cassette.

8. Appareil selon l'une quelconque des revendications précédentes, comprenant au moins un support mobile (8), ledit dispositif de décalage (70) pour déplacer au moins une lame et ledit au moins un élément de déviation (50) pour dévier le champ de lecture opérationnel (F) étant tous deux agencés sur ledit support mobile (8), de préférence ledit support mobile (8) et/ou ledit au moins un récipient (10) peuvent se déplacer le long d'une ligne (L), ou parallèlement à ladite ligne (L), le long de laquelle les lames (2) ou les cassettes (3) sont agencées successivement.

9. Appareil selon la revendication 8, dans lequel ledit dispositif de lecture (60) est agencé sur ledit support mobile (8), ledit dispositif de décalage (70) pour déplacer au moins une lame étant mobile par rapport audit dispositif de lecture (60), ou ledit dispositif de lecture (60) étant mobile par rapport audit dispositif de décalage (70).

10. Appareil selon l'une quelconque des revendications 8-9, dans lequel ledit dispositif de décalage (70), ledit dispositif de lecture (60) et ledit au moins un élément de déviation (50) sont agencés de telle sorte que l'activation dudit dispositif de décalage amène au moins une lame à être déplacée dans le champ de lecture opérationnel (F) dudit dispositif de lecture (60) et, en même temps, amène l'élément de déviation (50) à s'éloigner du champ de lecture opérationnel.

11. Système d'identification de lames (2) et de cassettes (3) pour des échantillons de matériel biologique, comprenant au moins un appareil (1) selon l'une quelconque des revendications précédentes, une pluralité de récipients de soutien (10) pour une pluralité de lames ou de cassettes pouvant être insérées dans ledit au moins un appareil (1), de préférence ledit système comprenant en outre au moins une unité de stockage pour stocker lesdits récipients (10).

12. Procédé d'identification de lames (2) et/ou de cassettes (3) pour des échantillons de matériel biologique au moyen d'un appareil selon l'une quelconque des revendications 1 à 10, le procédé comprenant l'étape consistant à exécuter sélectivement soit un premier mode de lecture pour lesdites lames par l'intermédiaire dudit dispositif de décalage (70) pour déplacer au moins une lame, soit un second mode de lecture pour lesdites cassettes par l'intermédiaire dudit élément de déviation (50) pour dévier le champ opérationnel dudit dispositif de lecture (60), comprenant dans ledit premier mode de lecture l'étape consistant à déplacer la lame (2) par rapport à une position de repos vers une position de fonctionnement dans laquelle la lecture a lieu, comprenant en outre dans ledit second mode de lecture l'étape consistant à agencer ledit élément de déviation (50) pour dévier le champ de lecture opérationnel (F) entre ledit dispositif de lecture (60) et au moins une cassette (3).

13. Procédé selon la revendication 12, **caractérisé en ce qu'**il comprend l'étape de réception d'un signal (S1) indiquant la requête de lecture d'au moins une lame (2) ou de réception d'un signal (S2) indiquant la requête de lecture d'au moins une cassette (3), de préférence, lors de l'utilisation d'un appareil selon l'une quelconque des revendications 2-5 ou 6-10 quand elles dépendent des revendications 2-5, par l'intermédiaire de ladite unité de commande (C) de l'appareil (1).

14. Procédé selon la revendication 12 ou 13, **caractérisé en ce qu'**il comprend l'étape consistant à détecter si ledit récipient (10) contient des lames (2) ou des cassettes (3) et, sur la base de ladite détection, à exécuter de manière sélective soit un premier mode de lecture pour lesdites lames par l'intermédiaire dudit dispositif de décalage (70) pour déplacer au moins une lame, soit d'un second mode de lecture pour lesdites cassettes par l'intermédiaire dudit élément de déviation (50) pour dévier le champ de lecture opérationnel (F).

15. Procédé selon l'une quelconque des revendications 12 à 14, **caractérisé en ce qu'**il comprend l'étape consistant à déplacer de préférence temporairement ledit dispositif de lecture (60) en correspondance avec une lame (2) ou une cassette (3).
